# EUROPEAN PATENT APPLICATION

(11) **EP 4 495 383 A1**
(43) Date of publication of application: **22.01.2025**
(21) Application number: 24190070.3
(22) Date of filing: 22.07.2024
(51) Int. Cl.: F01D 5/18, F01D 9/06, F01D 25/12

(54) **TURBINE ENGINE VANE ARRAY STRUCTURE WITH AIR PARTICLE SEPARATOR**

(30) Priority: 21.07.2023 US 202318224938
(71) Applicant: RTX Corporation, Farmington, CT 06032 (US)
(72) Inventor: KELSEY, Christine, East Hampton, 06424 (US)
(74) Representative: Dehns

(57) **Abstract**

An assembly (76) is provided for a turbine engine (14). This assembly (76) includes a vane array structure (78) and an air particle separator (84). The vane array structure (78) includes an inner platform (92), an outer platform (94) and a plurality of vanes (96). The inner platform (92) forms an inner peripheral boundary of a flowpath (62) through the vane array structure (78). The outer platform (94) forms an outer peripheral boundary of the flowpath (62) through the vane array structure (78). The vanes (96) are arranged circumferentially about an axis (22). Each of the vanes (96) extends radially across the flowpath (62) from the inner platform (92) to the outer platform (94). The vanes (96) include a first vane. The air particle separator (84) is arranged within the first vane.

## Description

### BACKGROUND OF THE DISCLOSURE

### 1. Technical Field

This disclosure relates generally to a turbine engine and, more particularly, to providing clean air to an internal volume within the turbine engine.

### 2. Background Information

It is known in the art to provide a bearing compartment of a turbine engine with compressed air. Various systems and methods are known in the art for providing the compressed air to the bearing compartment. While these known systems and methods have various benefits, there is still room in the art for improvement.

### SUMMARY OF THE DISCLOSURE

According to an aspect of the present disclosure, an assembly is provided for a turbine engine. This assembly includes a vane array structure and an air particle separator. The vane array structure includes an inner platform, an outer platform and a plurality of vanes. The inner platform forms an inner peripheral boundary of a flowpath through the vane array structure. The outer platform forms an outer peripheral boundary of the flowpath through the vane array structure. The vanes are arranged circumferentially about an axis. Each of the vanes extends radially across the flowpath from the inner platform to the outer platform. The vanes include a first vane. The air particle separator is arranged within the first vane.

According to another aspect of the present disclosure, another assembly is provided for a turbine engine. This assembly includes a vane array structure and an air particle separator. The vane array structure includes an inner platform, an outer platform and a plurality of vanes. The inner platform forms an inner peripheral boundary of a flowpath through the vane array structure. The outer platform forms an outer peripheral boundary of the flowpath through the vane array structure. The vanes are arranged circumferentially about an axis. Each of the vanes extends radially across the flowpath from the inner platform to the outer platform. The vanes include a first vane. The first vane includes a channel and a passage that extends around the channel within the first vane. The air particle separator includes an input air inlet, a clean air outlet and a waste air outlet. The input air inlet is fluidly coupled with the clean air outlet and the waste air outlet. The waste air outlet is fluidly coupled with and configured to direct waste air to the passage.

According to still another aspect of the present disclosure, a method of operation is provided. This method includes: directing bleed air into a vane of a vane array structure within a turbine engine, wherein the vane extends across a core flowpath within the turbine engine; processing the bleed air within the vane to provide clean air and waste air, wherein the waste air includes more debris than the clean air; cooling the vane using the waste air; and directing the clean air into a bearing compartment within the turbine engine.

The following optional features may be applied to any of the above aspects.

The passage may spiral around the channel.

The air particle separator may be disposed in the channel.

The assembly may also include an engine structure with an internal volume. The clean air outlet may be fluidly coupled with and configured to direct clean air to the internal volume.

The air particle separator may be configured as or otherwise include a vortex air particle separator.

The assembly may also include an air source. The air particle separator may be fluidly coupled with and configured to receive air from the air source.

The air source may be configured as or otherwise include a bleed orifice. The bleed orifice may be configured to bleed air from the flowpath upstream of the vane array structure.

The assembly may also include an engine core including a compressor section, a combustor section and a turbine section. The flowpath may extend through the compressor section, the combustor section and the turbine section from an inlet into the flowpath to an exhaust from the flowpath. The bleed orifice may be arranged along the flowpath upstream of a combustor within the combustor section.

The vane array structure may be arranged along the flowpath downstream of the combustor.

The assembly may also include an engine core and a bypass flowpath bypassing the engine core. The engine core may include a compressor section, a combustor section and a turbine section. The flowpath may be a core flowpath which extends through the compressor section, the combustor section and the turbine section from an inlet into the core flowpath to an exhaust from the core flowpath. The air source may be configured as or otherwise include a bleed orifice. The bleed orifice may be configured to bleed air from the bypass flowpath.

The assembly may also include a bearing compartment radially inboard of the vane array structure. An outlet of the air particle separator may be fluidly coupled with and configured to direct cleaned air to the bearing compartment.

An outlet of the air particle separator may be fluidly coupled with and configured to direct waste air to the flowpath.

The assembly may also include an engine core and a bypass flowpath bypassing the engine core. The engine core may include a compressor section, a combustor section and a turbine section. The flowpath may be a core flowpath which extends through the compressor section, the combustor section and the turbine section from an inlet into the core flowpath to an exhaust from the core flowpath. An outlet of the air particle separator may be fluidly coupled with and configured to direct waste air to the bypass flowpath.

An outlet of the air particle separator may be configured to direct waste air to a passage of the first vane. The passage may be located between the air particle separator and the flowpath.

The passage may circumscribe the air particle separator.

The passage may spiral around a span line of the first vane.

The assembly may also include an engine core including a compressor section, a combustor section and a turbine section. The flowpath may extend through the compressor section, the combustor section and the turbine section from an inlet into the flowpath to an exhaust from the flowpath. The vane array structure may be disposed along the flowpath downstream of the turbine section.

The assembly may also include a propulsor rotor and an engine core configured to drive rotation of the propulsor rotor. The engine core may include a compressor section, a combustor section and a turbine section. The flowpath may extend through the compressor section, the combustor section and the turbine section from an inlet into the flowpath to an exhaust from the flowpath.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial side schematic illustration of a powerplant for an aircraft.
FIG. 2 is a partial side schematic illustration of an assembly for the aircraft powerplant with a first passage outlet arrangement.
FIG. 3 is a schematic illustration of a vane array structure with an air particle separator.
FIG. 4 is a partial side schematic illustration of the powerplant assembly with a second passage outlet arrangement.

### DETAILED DESCRIPTION

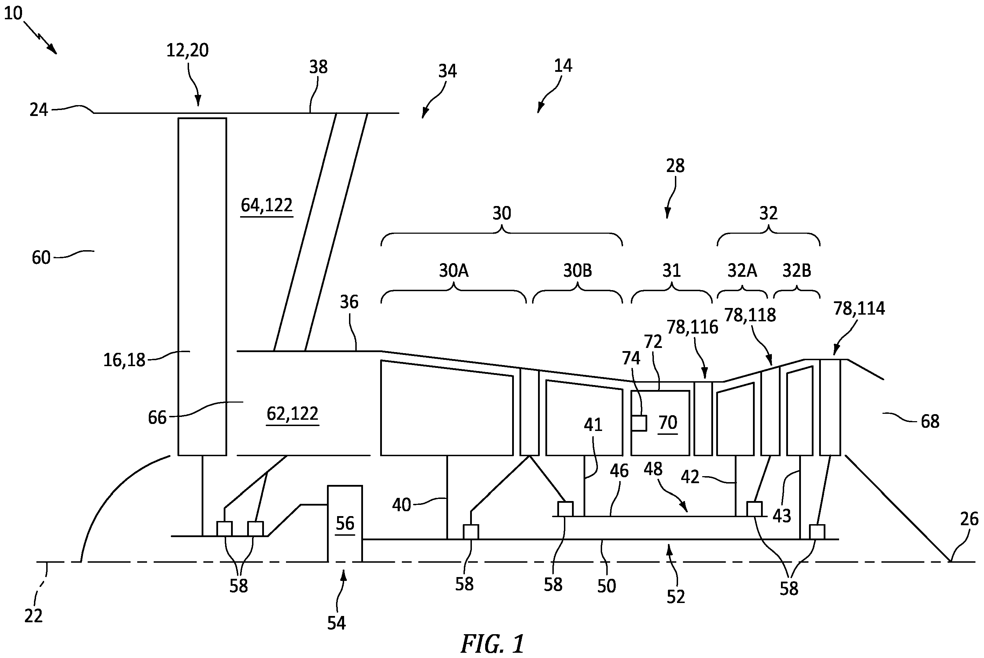

FIG. 1 illustrates a powerplant 10 for an aircraft. The aircraft may be an airplane, a helicopter, a drone (e.g., an unmanned aerial vehicle (UAV)) or any other manned or unmanned aerial vehicle or system. The powerplant 10 may be configured as, or otherwise included as part of, a propulsion system for the aircraft. The powerplant 10 may also or alternatively be configured as, or otherwise included as part of, an electrical power system for the aircraft. The powerplant 10 of FIG. 1 includes a mechanical load 12 and a gas turbine engine 14 configured to power the mechanical load 12.

The mechanical load 12 of FIG. 1 includes at least one driven rotor 16. This driven rotor 16 may be configured as a bladed propulsor rotor for the aircraft propulsion system. The propulsor rotor may be a ducted propulsor rotor or an open propulsor rotor; e.g., an un-ducted propulsor rotor. An example of the ducted propulsor rotor is a fan rotor 18 for a ducted propulsion system; e.g., a turbofan propulsion system. Examples of the open propulsor rotor include a propeller rotor for a propeller propulsion system (e.g., a turboprop propulsion system), a rotorcraft rotor (e.g., a main helicopter rotor) for a rotorcraft propulsion system (e.g., a turboshaft propulsion system), a pusher fan rotor for a pusher fan propulsion system, and a propfan rotor for a propfan propulsion system. Alternatively, the driven rotor 16 may be configured as a generator rotor of an electric power generator for the aircraft electrical power system; e.g., an auxiliary power unit (APU) system. However, for ease of description, the mechanical load 12 is described below as a fan section 20, and the driven rotor 16 is described below as the fan rotor 18 within the fan section 20.

The turbine engine 14 has a centerline axis 22, and extends axially along the centerline axis 22 from an upstream end 24 of the turbine engine 14 to a downstream end 26 of the turbine engine 14. The turbine engine 14 of FIG. 1 includes the fan section 20 and a turbine engine core 28 (e.g., a gas generator) configured to power operation of the fan section 20. The engine core 28 includes a compressor section 30, a combustor section 31 and a turbine section 32. The compressor section 30 of FIG. 1 includes a low pressure compressor (LPC) section 30A and a high pressure compressor (HPC) section 30B. The turbine section 32 of FIG. 1 includes a high pressure turbine (HPT) section 32A and a low pressure turbine (LPT) section 32B.

The engine sections 20 and 30A-32B may be arranged sequentially along the centerline axis 22 within an engine housing 34. This engine housing 34 includes an inner case 36 (e.g., a core case) and an outer case 38 (e.g., a fan case). The inner case 36 may house one or more of the engine sections 30A-32B; e.g., the engine core 28. The outer case 38 may house at least the fan section 20.

The LPC section 30A includes a low pressure compressor (LPC) rotor 40. The HPC section 30B includes a high pressure compressor (HPC) rotor 41. The HPT section 32A includes a high pressure turbine (HPT) rotor 42. The LPT section 32B includes a low pressure turbine (LPT) rotor 43. Each of these engine rotors 40-43 and the fan rotor 18 includes a plurality of rotor blades arranged circumferentially around and connected to one or more respective rotor disks. The rotor blades, for example, may be formed integral with or mechanically fastened, welded, brazed and/or otherwise attached to the respective rotor disk(s).

The HPC rotor 41 is coupled to and rotatable with the HPT rotor 42. The HPC rotor 41 of FIG. 1, for example, is connected to the HPT rotor 42 by a high speed shaft 46. At least (or only) the HPC rotor 41, the HPT rotor 42 and the high speed shaft 46 collectively form a high speed rotating assembly 48; e.g., a high speed spool.

The LPC rotor 40 is coupled to and rotatable with the LPT rotor 43. The LPC rotor 40 of FIG. 1, for example, is connected to the LPT rotor 43 by a low speed shaft 50. At least (or only) the LPC rotor 40, the LPT rotor 43 and the low speed shaft 50 collectively form a low speed rotating assembly 52; e.g., a low speed spool. This low speed rotating assembly 52 is further coupled to the fan rotor 18 (the driven rotor 16) through a drivetrain 54. This drivetrain 54 may be configured as a geared drivetrain, where a geartrain 56 (e.g., a transmission, a speed change device, an epicyclic geartrain, etc.) is disposed between and operatively couples the fan rotor 18 to the low speed rotating assembly 52 and its LPT rotor 43. With this arrangement, the fan rotor 18 may rotate at a different (e.g., slower) rotational velocity than the low speed rotating assembly 52 and its LPT rotor 43. However, the drivetrain 54 may alternatively be configured as a direct drive drivetrain, where the geartrain 56 is omitted. With this arrangement, the fan rotor 18 rotates at a common (the same) rotational velocity as the low speed rotating assembly 52 and its LPT rotor 43.

Referring again to FIG. 1, each of the rotating assemblies 48, 52 and its members is rotatably supported by a plurality of bearings 58; e.g., rolling element and/or thrust bearings. Each of these bearings 58 is connected to the engine housing 34 by at least one stationary structure such as, for example, a bearing support frame. Each of the rotating assemblies 48, 52 and its members is thereby rotatable about a respective rotational axis. Each of these rotational axes may be parallel (e.g., coaxial) with the centerline axis 22.

During operation of the powerplant 10 of FIG. 1, air enters the powerplant 10 and its turbine engine 14 through an airflow inlet 60. This air is directed through the fan section 20 and into a core flowpath 62 (e.g., annular core flowpath) and a bypass flowpath 64 (e.g., annular bypass flowpath). The core flowpath 62 extends through the engine core 28 and sequentially longitudinally through the engine sections 30A-32B from an airflow inlet 66 into the core flowpath 62 to a combustion products exhaust 68 from the core flowpath 62. The air within the core flowpath 62 may be referred to as "core air". The bypass flowpath 64 extends through a bypass duct and bypasses (e.g., is radially outboard of and extends along) the engine core 28. The air within the bypass flowpath 64 may be referred to as "bypass air".

The core air is compressed by the LPC rotor 40 and the HPC rotor 41 and directed into a combustion chamber 70 (e.g., an annular combustion chamber) of a combustor 72 (e.g., an annular combustor) in the combustor section 31. Fuel is injected into the combustion chamber 70 by one or more fuel injectors 74 and mixed with the compressed core air to provide a fuel-air mixture. This fuel-air mixture is ignited and combustion products thereof flow through and sequentially cause the HPT rotor 42 and the LPT rotor 43 to rotate. The rotation of the HPT rotor 42 and the LPT rotor 43 respectively drive rotation of the HPC rotor 41 and the LPC rotor 40 and, thus, compression of the air received from the core inlet 66. The rotation of the LPT rotor 43 also drives rotation of the fan rotor 18 (the driven rotor 16), which propels the bypass air through and out of the bypass flowpath 64. The propulsion of the bypass air may account for a majority of thrust generated by the aircraft propulsion system. Of course, where the mechanical load 12 also or alternatively includes the generator rotor, the rotation of the LPT rotor 43 may drive the electric power generator to generate electricity.

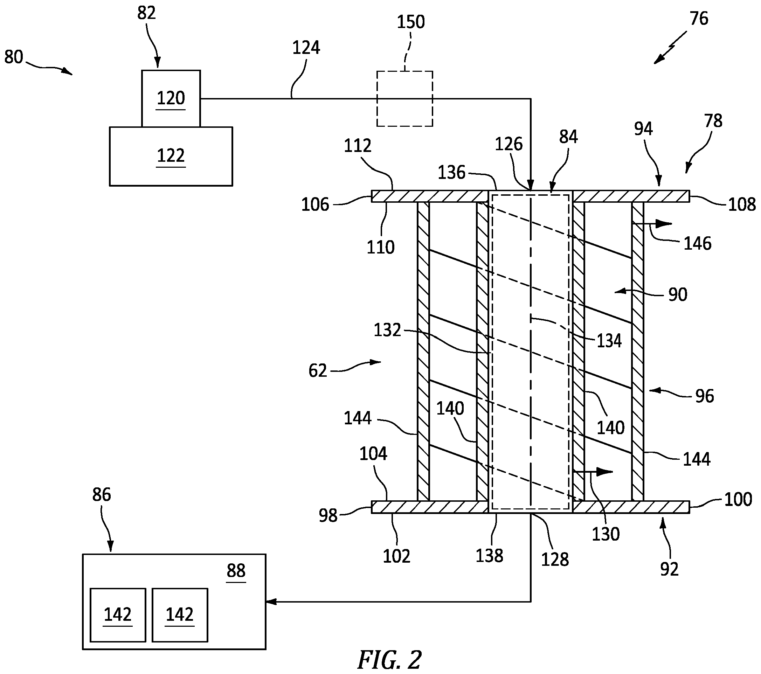

FIG. 2 partially illustrates an assembly 76 of the turbine engine 14. This engine assembly 76 includes a vane array structure 78 and a fluid system 80; e.g., an air delivery system. The fluid system 80 includes an air source 82, an air particle separator 84 (APS), an engine structure 86 with an internal volume 88, and a waste air passage 90.

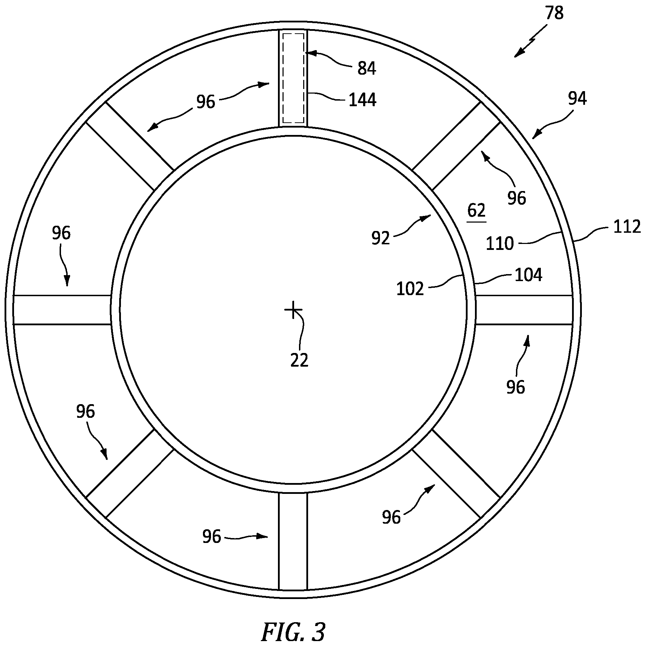

Referring to FIG. 3, the vane array structure 78 includes a radial inner platform 92 and a radial outer platform 94. The vane array structure 78 also includes a plurality of stator vanes 96 arranged circumferentially about the centerline axis 22 in an array; e.g., a circular array.

The inner platform 92 of FIG. 2 extends axially along the centerline axis 22 from an upstream end 98 of the inner platform 92 to a downstream end 100 of the inner platform 92. The inner platform 92 extends radially between and to a radial inner side 102 of the inner platform 92 and a radial outer side 104 of the inner platform 92. The inner platform 92 and its outer side 104 form an inner peripheral boundary of the core flowpath 62 longitudinally through the vane array structure 78. The inner platform 92 of FIG. 3 extends circumferentially about (e.g., completely around) the centerline axis 22. The inner platform 92 may thereby have a full-hoop (e.g., tubular) geometry.

The outer platform 94 of FIG. 2 extends axially along the centerline axis 22 from an upstream end 106 of the outer platform 94 to a downstream end 108 of the outer platform 94. The outer platform 94 extends radially between and to a radial inner side 110 of the outer platform 94 and a radial outer side 112 of the outer platform 94. The outer platform 94 and its inner side 110 form an outer peripheral boundary of the core flowpath 62 longitudinally through the vane array structure 78. The outer platform 94 of FIG. 3 extends circumferentially about (e.g., completely around) the centerline axis 22. The outer platform 94 may thereby have a full-hoop (e.g., tubular) geometry. The outer platform 94 of FIG. 2 is spaced radially outboard of and axially overlaps the inner platform 92 and the stator vanes 96. The outer platform 94 may thereby circumscribe the inner platform 92 and the array of the stator vanes 96; see also FIG. 3.

The stator vanes 96 are arranged radially between the inner platform 92 and the outer platform 94. Each of the stator vanes 96 extends radially across the core flowpath 62 from the inner platform 92 to the outer platform 94. Each of the stator vanes 96 is connected to the inner platform 92 at (e.g., on, adjacent or proximate) the inner platform outer side 104. Each stator vane 96, for example, may be mechanically fastened (e.g., removably attached), bonded and/or otherwise attached to the inner platform 92. Alternatively, it is contemplated each stator vane 96 may be formed integral with the inner platform 92. Each of the stator vanes 96 is connected to the outer platform 94 at the outer platform inner side 110. Each stator vane 96, for example, may be mechanically fastened (e.g., removably attached), bonded and/or otherwise attached to the outer platform 94. Alternatively, it is contemplated each stator vane 96 may be formed integral with the outer platform 94.

Referring to FIG. 1, the vane array structure 78 may be arranged at various locations along the core flowpath 62, forming a respective portion of the core flowpath 62. For example, the vane array structure 78 may be arranged longitudinally along the core flowpath 62 between the LPT section 32B and the core exhaust 68. With such an arrangement, the vane array structure 78 may be configured as (or may be included as part of) a turbine exhaust case 114 (TEC) of the turbine engine 14. In another example, the vane array structure 78 may be arranged longitudinally along the core flowpath 62 between the combustor section 31 and the HPT section 32A. With such an arrangement, the vane array structure 78 may be configured as a combustor outlet nozzle and/or a turbine inlet nozzle 116. In still another example, the vane array structure 78 may be arranged longitudinally along the core flowpath 62 between the HPT section 32A and the LPT section 32B. With such an arrangement, the vane array structure 78 may be configured as (or may be included as part of) a mid-turbine frame 118. While the foregoing vane array structure locations are downstream of the combustor 72 along the core flowpath 62, it is contemplated the vane array structure 78 may alternatively be arranged longitudinally along the core flowpath 62 upstream of the combustor 72 (e.g., along the HPC section 30B) for select other turbine engine configurations. However, for ease of description, the vane array structure 78 is generally described below as being arranged downstream of the combustor 72 along the core flowpath 62 and, more particularly, as being configured as the turbine exhaust case 114.

Referring to FIG. 2, the air source 82 is configured to provide compressed air to the air particle separator 84. This air source 82, for example, may be configured as a bleed orifice 120 (or multiple bleed orifices) along an engine flowpath 122 of the turbine engine 14. The bleed orifice 120 is configured to bleed a relatively small quantity of air from the engine flowpath 122, and direct the bleed air into an inlet passage 124 of the fluid system 80. This inlet passage 124 fluidly couples the bleed orifice 120 to an input air inlet 126 into the air particle separator 84. Referring to FIG. 1, the engine flowpath 122 may be the core flowpath 62 or the bypass flowpath 64. Where the engine flowpath 122 is the core flowpath 62, the bleed orifice 120 is arranged upstream of the vane array structure 78 along the core flowpath 62. The bleed orifice 120, for example, may be arranged along the compressor section 30 (e.g., the HPC section 30B) or between the compressor section 30 and the combustor 72 (e.g., along a plenum surrounding the combustor 72). The present disclosure, however, is not limited to such an exemplary arrangement.

The air particle separator 84 of FIG. 2 receives input air (the bleed air) from the air source 82 through its input air inlet 126. Under certain conditions, debris such as dirt, sand and/or the like may be entrained with (e.g., carried by) the input air. The air particle separator 84 is configured to substantially separate out this debris to provide two different output flows - clean air and waste air (e.g., dirty air). The clean air may be substantially (or completely) devoid of the debris; e.g., include less than twenty percent (20%), ten percent (10%) or five percent (5%) of the debris entrained in the input air. This clean air is output from the air particle separator 84 through a clean air outlet 128 of the air particle separator 84. The waste air may include a substantial portion (or all) of the debris; e.g., include more than eighty percent (80%), ninety percent (90%) or ninety-five percent (95%) of the debris entrained in the input air. This waste air is output from the air particle separator 84 through a waste air outlet 130 (e.g., a dirty air outlet) of the air particle separator 84. An example of this air particle separator 84 is a vortex air particle separator; e.g., a vortex tube separator. Various other types of air particle separators are known in the art, and the present disclosure is not limited to any particular ones thereof. However, it is contemplated the vortex air particle separator may be particularly well suited for locating within the vane array structure 78 as described below.

The air particle separator 84 of FIG. 2 is disposed within a respective one of the stator vanes 96; e.g., a hollow stator vane. More particularly, the air particle separator 84 is disposed within and/or forms an internal channel 132 within the respective stator vane 96. This internal channel 132 may extend spanwise along a span line 134 of the respective stator vane 96 (e.g., radially) through the vane array structure 78 and its respective stator vane 96 from a radial outer end 136 of the internal channel 132 at the outer platform 94 to a radial inner end 138 of the internal channel 132 at the inner platform 92. The internal channel 132 and, thus, the air particle separator 84 are separated (e.g., fluidly decoupled) from the waste air passage 90 by an interior wall 140 within the respective stator vane 96. The interior wall 140 extends longitudinally along the internal channel 132 from the channel outer end 136 to the channel inner end 138, and circumferentially around the internal channel 132. The input air inlet 126 is disposed at the channel outer end 136. The clean air outlet 128 is disposed at the channel inner end 138. The waste air outlet 130 is disposed next to or near the channel inner end 138, for example in the interior wall 140.

In some embodiments, the air particle separator 84 may be formed as an integral part of the respective stator vane 96. In other embodiments, the air particle separator 84 may be assembled with and attached to the respective stator vane 96.

The engine structure 86 of FIG. 2 is configured to house one or more engine bearings 142 within the internal volume 88; e.g., one or more of the bearings 58 of FIG. 1. The internal volume 88, for example, may be a bearing compartment for the engine bearings 142. The present disclosure, however, is not limited to such an exemplary engine structure arrangement. For example, in other embodiments, the internal volume 88 may be configured as another cavity, passage, flow circuit, etc. within the turbine engine 14 which receives air for cooling, pressurization and/or otherwise. For example, the engine structure 86 may alternatively be configured as one of the turbine rotors 42, 43 (see FIG. 1), and the internal volume 88 may be an internal cooling circuit within the respective turbine rotor 42, 43.

The internal volume 88 is fluidly coupled with and downstream of the clean air outlet 128. The air particle separator 84 is thereby configured to direct the clean air into the internal volume 88 through its clean air outlet 128 during turbine engine operation.

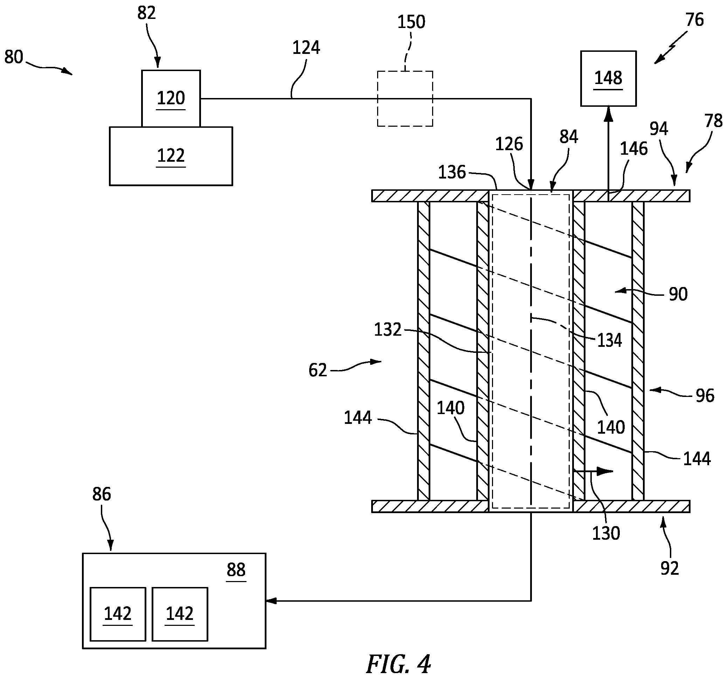

The waste air passage 90 is disposed within the respective stator vane 96 with the air particle separator 84. The waste air passage 90 of FIG. 2, for example, extends spanwise along the span line 134 of the respective stator vane 96 from or about the channel inner end 138 at the inner platform 92 to or about the channel outer end 136 at the outer platform 94. The waste air passage 90 of FIG. 2 is formed by and laterally (e.g., radially relative to the span line 134) between the interior wall 140 and an exterior wall 144 of the respective stator vane 96. This exterior wall 144 may form a lateral peripheral boundary of the core flowpath 62 within the vane array structure 78; e.g., the exterior wall 144 may be an exterior fairing / shell of the respective stator vane 96. The exterior wall 144 thereby separates (e.g., fluidly decouples) the waste air passage 90 from the core flowpath 62. The waste air passage 90 extends circumferentially about the elements 84, 132, 134 and 140. The waste air passage 90 of FIG. 2, for example, spirals around the elements 84, 132, 134 and 140 one or more times as the waste air passage 90 extends longitudinally from an inlet into the waste air passage 90 (here, the waste air outlet 130 from the air particle separator 84) to an outlet 146 from the waste air passage 90. The passage outlet 146 may be disposed spanwise / radially at or about the outer platform 94. The passage outlet 146 of FIG. 2, for example, is disposed in the exterior wall 144. With this arrangement, the passage outlet 146 may be fluidly coupled with the core flowpath 62. In another example, referring to FIG. 4, the passage outlet 146 may be disposed in the outer platform 94. With this arrangement, the passage outlet 146 may be fluidly coupled with a volume 148 radially outboard of the vane array structure 78 such as, but not limited to, the bypass flowpath 64 (see FIG. 1).

During operation of the fluid system 80 of FIG. 2, the air particle separator 84 receives the input air from the air source 82. The air particle separator 84 separates the input air into the clean air and the waste air, which waste air includes some or all of the debris entrained with the input air. The clean air outlet 128 directs the clean air to the engine structure 86 and its internal volume 88 to, for example, pressurize the internal volume 88 (e.g., the bearing compartment). By providing this clean air to the internal volume 88, a likelihood of contaminating lubricant provided to the engine bearings 142 within the internal volume 88 (e.g., with the debris in the input air) is reduced or eliminated. Concurrently, the waste air outlet 130 directs the waste air to the waste air passage 90 to cool the respective stator vane 96. The waste air is directed through the waste air passage 90 and along the exterior wall 144 prior to being exhausted into the core flowpath 62 (or the bypass flowpath 64 of FIG. 4) via the passage outlet 146. The waste air may thereby cool the exterior wall 144 of the respective stator vane 96 via convection, which exterior wall 144 is heated by the combustion products flowing in the core flowpath 62. The waste air may also provide an air buffer (e.g., thermal insulation) between the core flowpath 62 and the air particle separator 84. This air buffering may reduce or prevent heating of the air flowing in the air particle separator 84 by heat energy from the combustion products flowing in the core flowpath 62. The air particle separator 84 may thereby provide relatively cool clean air to the engine structure 86 and its internal volume 88, which in turn may reduce heating of the lubricant within the internal volume 88. It is contemplated the waste air may shield the air particle separator 84 enough from the combustion products within the core flowpath 62 to reduce or eliminate a need for a heat exchanger (e.g., an air cooler) between the air source 82 and the air particle separator 84. Of course, it is contemplated a heat exchanger 150 may be arranged between the air source 82 and the air particle separator 84 to facilitate provision of even cooler clean air to the engine structure 86 and its internal volume 88.

The engine assembly 76 may be included in various turbine engines other than the one described above. The engine assembly 76, for example, may be included in a turbine engine with a single spool, with two spools (e.g., see FIG. 1), or with more than two spools. Moreover, while the turbine engine is described above with respect to aircraft powerplant applications, it is contemplated the turbine engine may alternatively be configured for other (non-aircraft) applications. The powerplant 10, for example, may be configured as (or included as part of) an industrial power generation system. The present disclosure therefore is not limited to any particular types or configurations of turbine engines.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly (76) for a turbine engine (14), comprising:
a vane array structure (78) including an inner platform (92), an outer platform (94) and a plurality of vanes (96), the inner platform (92) forming an inner peripheral boundary of a flowpath (62) through the vane array structure (78), the outer platform (94) forming an outer peripheral boundary of the flowpath (62) through the vane array structure (78), the plurality of vanes (96) arranged circumferentially about an axis (22), each of the plurality of vanes (96) extending radially across the flowpath (62) from the inner platform (92) to the outer platform (94), and the plurality of vanes (96) comprising a first vane; and
an air particle separator (84) arranged within the first vane.

2. The assembly (76) of claim 1, wherein the air particle separator (84) comprises a vortex air particle separator.

3. The assembly (76) of claim 1 or 2, further comprising:
an air source (82);
the air particle separator (84) fluidly coupled with and configured to receive air from the air source (82).

4. The assembly (76) of claim 3, wherein:
the air source (82) comprises a bleed orifice (120); and
the bleed orifice (120) is configured to bleed air from the flowpath (62) upstream of the vane array structure (78).

5. The assembly (76) of claim 4, further comprising:
an engine core (28) including a compressor section (30), a combustor section (31) and a turbine section (32);
the flowpath (62) extending through the compressor section (30), the combustor section (31) and the turbine section (32) from an inlet (66) into the flowpath (62) to an exhaust (68) from the flowpath (62); and
the bleed orifice (120) arranged along the flowpath (62) upstream of a combustor (72) within the combustor section (31),
wherein, optionally, the vane array structure (78) is arranged along the flowpath (62) downstream of the combustor (72).

6. The assembly (76) of claim 3, 4 or 5, further comprising:
an engine core (28) including a compressor section (30), a combustor section (31) and a turbine section (32), the flowpath comprising a core flowpath (62) which extends through the compressor section (30), the combustor section (31) and the turbine section (32) from an inlet (66) into the core flowpath (62) to an exhaust (68) from the core flowpath (62); and
a bypass flowpath (64) bypassing the engine core (28);
the air source (82) comprising a bleed orifice (120), and the bleed orifice (120) configured to bleed air from the bypass flowpath (64).

7. The assembly (76) of any preceding claim, further comprising:
a bearing compartment (88) radially inboard of the vane array structure (78);
an outlet (128) of the air particle separator (84) fluidly coupled with and configured to direct cleaned air to the bearing compartment (88).

8. The assembly (76) of any preceding claim, wherein an outlet (146) of the air particle separator (84) is fluidly coupled with and configured to direct waste air to the flowpath (62).

9. The assembly (76) of any preceding claim, further comprising:
an engine core (28) including a compressor section (30), a combustor section (31) and a turbine section (32), the flowpath comprising a core flowpath (62) which extends through the compressor section (30), the combustor section (31) and the turbine section (32) from an inlet (66) into the core flowpath (62) to an exhaust (68) from the core flowpath (62); and
a bypass flowpath (64) bypassing the engine core (28);
an outlet (146) of the air particle separator (84) fluidly coupled with and configured to direct waste air to the bypass flowpath (64).

10. The assembly (76) of any preceding claim, wherein:
an outlet (130) of the air particle separator (84) is configured to direct waste air to a passage (90) of the first vane; and
the passage (90) is located between the air particle separator (84) and the flowpath (62), wherein, optionally:
the passage (90) circumscribes the air particle separator (84); and/or
the passage (90) spirals around a span line (134) of the first vane.

11. The assembly (76) of any preceding claim, further comprising:
an engine core (28) including a compressor section (30), a combustor section (31) and a turbine section (32);
the flowpath (62) extending through the compressor section (30), the combustor section (31) and the turbine section (32) from an inlet (66) into the flowpath (62) to an exhaust (68) from the flowpath (62); and
the vane array structure (78) disposed along the flowpath (62) downstream of the turbine section (32).

12. The assembly (76) of any preceding claim, further comprising:
a propulsor rotor (16); and
an engine core (28) configured to drive rotation of the propulsor rotor (16), the engine core (28) including a compressor section (30), a combustor section (31) and a turbine section (32);
the flowpath (62) extending through the compressor section (30), the combustor section (31) and the turbine section (32) from an inlet (66) into the flowpath (62) to an exhaust (68) from the flowpath (62).

13. An assembly (76) for a turbine engine (14), comprising:
a vane array structure (78) including an inner platform (92), an outer platform (94) and a plurality of vanes (96), the inner platform (92) forming an inner peripheral boundary of a flowpath (62) through the vane array structure (78), the outer platform (94) forming an outer peripheral boundary of the flowpath (62) through the vane array structure (78), the plurality of vanes (96) arranged circumferentially about an axis (22), each of the plurality of vanes (96) extending radially across the flowpath (62) from the inner platform (92) to the outer platform (94), the plurality of vanes (96) comprising a first vane, and the first vane comprising a channel (132) and a passage (90) that extends around the channel (132) within the first vane; and
an air particle separator (84) including an input air inlet (126), a clean air outlet (128) and a waste air outlet (130), the input air inlet (126) fluidly coupled with the clean air outlet (128) and the waste air outlet (130), and the waste air outlet (130) fluidly coupled with and configured to direct waste air to the passage (90);
wherein, optionally, the assembly (76) further comprises:
an engine structure (86) with an internal volume (88);
the clean air outlet (128) fluidly coupled with and configured to direct clean air to the internal volume (88).

14. The assembly (76) of claim 13, wherein:
the passage (90) spirals around the channel (132); and/or
the air particle separator (84) is disposed in the channel (132).

15. A method of operation, comprising:
directing bleed air into a vane (96) of a vane array structure (78) within a turbine engine (14), wherein the vane (96) extends across a core flowpath (62) within the turbine engine (14);
processing the bleed air within the vane (96) to provide clean air and waste air, wherein the waste air includes more debris than the clean air;
cooling the vane (96) using the waste air; and
directing the clean air into a bearing compartment (88) within the turbine engine (14).
